(19) Europäisches Patentamt

European Patent Office

Office européen des brevets

(11) **EP 1 028 552 A1**

(12) **EUROPEAN PATENT APPLICATION**
published in accordance with Art. 158(3) EPC

(43) Date of publication:
**16.08.2000 Bulletin 2000/33**

(51) Int. Cl.7: **H04J 13/00**

(21) Application number: **99940464.3**

(86) International application number:
**PCT/JP99/04572**

(22) Date of filing: **25.08.1999**

(87) International publication number:
**WO 00/13358 (09.03.2000 Gazette 2000/10)**

(84) Designated Contracting States:
**AT BE CH CY DE DK ES FI FR GB GR IE IT LI LU MC NL PT SE**

(30) Priority: **28.08.1998 JP 25948398**

(71) Applicant:
**MATSUSHITA ELECTRIC INDUSTRIAL CO., LTD.**
**Kadoma-shi, Osaka 571-8501 (JP)**

(72) Inventors:
- **TAKAHASHI, Hideyuki**
  **Yokosuka-shi, Kanagawa 239-0841 (JP)**
- **KATO, Osamu**
  **Yokosuka-shi, Kanagawa 237-0066 (JP)**
- **KAYAMA, Hidenori**
  **Yokosuka-shi, Kanagawa 239-0847 (JP)**

(74) Representative:
**Grünecker, Kinkeldey,**
**Stockmair & Schwanhäusser**
**Anwaltssozietät**
**Maximilianstrasse 58**
**80538 München (DE)**

(54) **SYNCHRONIZING DEVICE AND SYNCHRONIZING METHOD**

(57)     The synchronization acquisition apparatus calculates a correlation value for each search code group using at least two search codes assigned to the search code group beforehand and identifies the search code group first. Then, the synchronization acquisition apparatus calculates a correlation value using at least two search codes that have the array pattern corresponding to the identified search code group and detects frame timing. At this time, at least two search codes are assigned to each search code group in such a way that these search codes do not overlap among search code groups.

FIG.5

## Description

Technical Field

The present invention relates to an apparatus and method for synchronization acquisition incorporated in a mobile communication terminal (hereinafter referred to as "mobile station") used in a CDMA-based radio communication system.

Background Art

As a CDMA (Code Division Multiple Access)-based radio communication system, there can be two systems; inter-cell synchronous system and inter-cell asynchronous system. Since the inter-cell synchronous system requires another system such as a GPS (Global Positioning System) system, the inter-cell asynchronous system, which is simpler, is used more widely.

In this CDMA inter-cell asynchronous system, a mobile station needs to perform a cell search at initial synchronization when power is turned on, or when cells are switched (handover), etc.

As a synchronization acquisition method for this cell search, a comma-free system is used. The comma-free system is a system in which information is spread using codes called "comma-free" which are placed with certain regularity within one frame and this regularity is used to acquire frame synchronization and identify spreading codes. This comma-free-based synchronization acquisition method is explained using FIG.1 to FIG.4 below. FIG.1 is a flow chart to explain operation of a conventional synchronization acquisition method. FIG.2 shows a search code group placement table used in the conventional synchronization acquisition method. FIG.3 is a schematic diagram showing how correlation values are calculated in the conventional synchronization acquisition method. FIG.4 is a schematic diagram showing how power values are added in the conventional synchronization acquisition method.

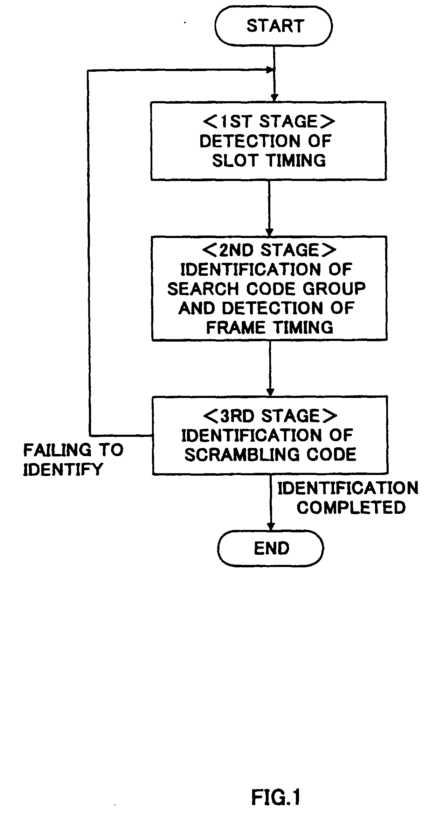

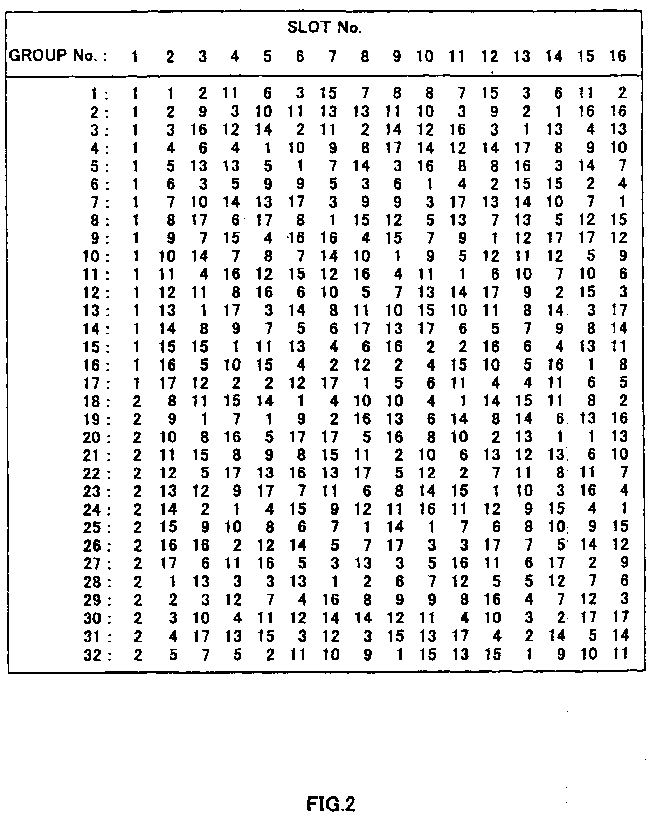

In the case of a cell search at initial synchronization, synchronization acquisition in a CDMA inter-cell asynchronous system is performed through three stages; 〈1st stage〉 detection of slot timing, 〈2nd stage〉 identification of search code group and detection of frame timing and 〈3rd stage〉 identification of scrambling code as shown in FIG.1. In the 1st stage, a spreading code, which is a same short-cycle code commonly used by all base stations (hereinafter referred to as "short code") is used. In the 2nd stage, a search code, which is a short code, is used. This search code is available in 17 types. According to different array patterns (see FIG.2) assigned to each search code group that includes a plurality of scrambling codes which are long-cycle codes (hereinafter referred to as "long codes"), each of search codes 1 to 17 is multiplied one symbol of each slot in one frame.

Processing carried out in the 1st to 3rd stages is explained below. In the following explanation, it is assumed that the number of slots in one frame is 16 slots, the number of scrambling codes is 512 and the number of search code groups is 32.

〈1st stage〉 Detection of slot timing

In the 1st stage, slot timing is detected using a control channel signal. In the control channel signal, a specific one symbol in all slots within one frame is spread using a spreading code commonly used by all base stations (hereinafter referred to as common spreading code"). Slot timing is detected using this common spreading code.

More specifically, slot timing is detected as follows:

(A) Calculates a correlation value between certain one-slot data within one frame of reception data and common spreading code.
(B) Shifts the phase of the common spreading code sequentially and calculates correlation values for one frame.
(C) Detects a peak of correlation values for one frame and detects the timing of the peak as slot timing.

〈2nd stage〉 Identification of search code group and detection of frame timing

In the second stage, a search code group is identified and frame timing is detected using the control channel signal. In the case of a control channel signal, a specific one symbol of all slots within one frame is spread using a search code. As shown in FIG.2, search codes used within one frame differ from one slot to another. A search code array pattern within one frame varies depending on the search code group into which a scrambling code has been classified. The search code group is identified and frame timing is detected using this search code.

More specifically, identification of the search code group and detection of the frame timing are carried out as follows:

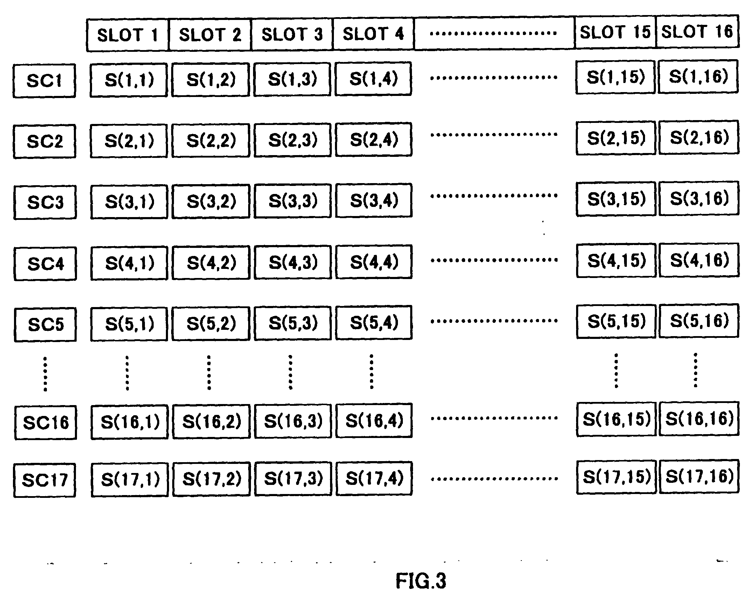

(A) Correlation processing is carried out between a specific one symbol of each slot within one frame and search code according to the slot timing detected in the 1st stage to calculate a correlation value. This correlation processing is carried out on slots 1 to 16 with SC1 to SC17 one by one as shown in FIG.3. That is, for slot 1, correlation values S(1,1) to S(17,1) are calculated with search codes SC1 to SC17, respectively. Likewise, for slots 2 to 16, correlation values are calculated with search codes SC1 to SC17, respectively. The correlation values calculated are stored in memory, etc.

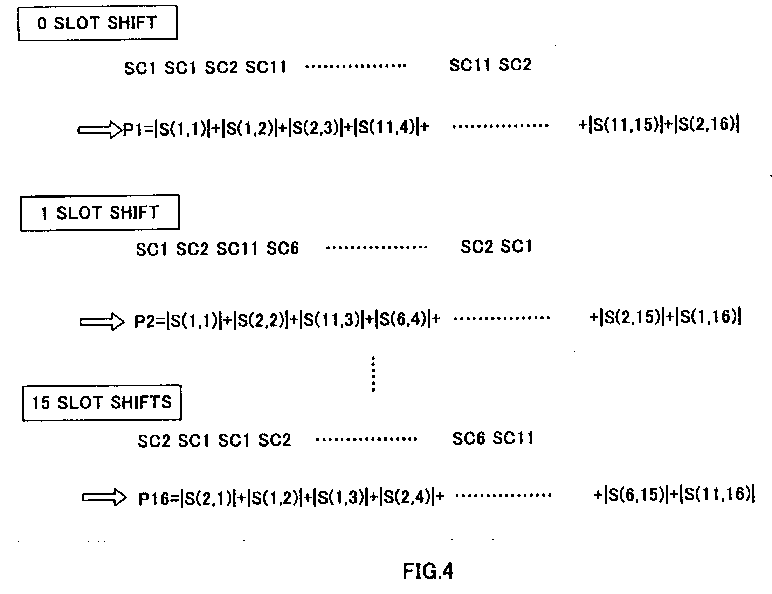

(B) As shown in FIG.4, power values of correlation values corresponding to 16 slots are added up for each search code group (for each line of the location table) according to the search code location table in FIG.2. At this time, as shown in FIG.4, this addition is repeated 16 times from 0 slot shift to 15 slot shifts by shifting the start slot one by one to calculate power value sums P1 to P16. Furthermore, this addition processing is repeated for 32 search code groups. FIG.4 shows how power values are added up for search code group number 1 shown in FIG.2.

(C) From the search code location in FIG.2 and the maximum value of the power value sums, the search code group is identified and frame timing is detected simultaneously.

〈3rd stage〉 Identification of scrambling code

In the 3rd stage, one scrambling code is identified from among the 16 scrambling code candidates confirmed from the search code group identified in the 2nd stage.

More specifically, a scrambling code is identified as follows:

(A) A correlation value between reception data and a scrambling code is calculated according to the detected frame timing. This processing is repeated for the 16 scrambling codes, which belong to the identified search code group.

(B) Of these correlation results, the one with the largest correlation value is identified as a scrambling code.

(C) If no scrambling code can be identified, the same procedure is repeated from detection of slot timing in the 〈1st stage〉.

On the other hand, in the case of a cell search during handover, since the mobile station is notified of the scrambling code given to the transfer destination base station from the transfer source base station, there is no further need to identify the scrambling code. Therefore, synchronization acquisition is performed in two stages of 〈1st stage〉 detection of slot timing and 〈2nd stage〉 detection of frame timing.

〈1st stage〉 Detection of slot timing

Since this is the same processing as that in the case of the cell search at initial synchronization above, its explanation is omitted.

〈2nd stage〉 Detection of frame timing

In the 2nd stage, a search code group is identified from the scrambling codes of the transfer destination base station notified from the transfer source base station. Then, frame timing is detected using the search codes belong to the search code group.

More specifically, frame timing is detected as follows:

(A) The search code group to which the scrambling codes of the transfer destination base station belong is identified.

(B) Correlation values corresponding to 16 slots are calculated for 16 search codes belong to the search code group and power values of these correlation values are added up. At this time, calculations of correlation values and addition of power values are repeated 16 times by shifting the start slot one by one to calculate power value sums P1 to P16.

(C) Frame timing is detected from the maximum value of the power value sums.

In this way, the mobile station used in the CDMA inter-cell asynchronous system performs synchronization acquisition during a cell search.

However, the conventional apparatus and method for synchronization acquisition have problems like 1) the 2nd stage in a cell search at the time of initial synchronization involves a great amount of calculations, taking much time to identify a search code group and detect frame timing, 2) the 2nd stage in a cell search during handover involves a great amount of calculations, taking much time to detect frame timing, and 3) it is not easy to change the number of scrambling codes according to the number of base stations installed in the radio communication system. These problems 1) to 3) are explained below.

First, problem 1) is explained. In a cell search at initial synchronization in the 2nd stage, correlation values are calculated on slots 1 to 16 with search codes SC1 to SC17. Therefore, the total number of calculations of correlation values is:

$$17 \text{ search codes} \times 16 \text{ slots} = 272 \text{ times}$$

Furthermore, in the 2nd stage, a power value addition process is repeated 16 times according to the search code location table in FIG.2 for all 32 search code groups by shifting the start slot one by one. Since 16 correlation values are added up for every addition process, the number of additions per one addition process is 15. Therefore, the total number of additions is:

$$15 \text{ times} \times 32 \text{ search code groups} \times 16 \text{ slots} = 7680 \text{ times}$$

In this way, a cell search at initial synchronization requires a large amount of calculations in the 2nd stage, which takes much time to identify the search code group and detect frame timing.

Then, problem 2) is explained. In a cell search during handover in the 2nd stage, correlation values corresponding to 16 slots are repeatedly calculated 16 times for 16 search codes by shifting the start slot one by one. Therefore, the total number of calculations of correlation values is:

$$16 \text{ search codes} \times 16 \text{ slots} = 256 \text{ times}$$

Furthermore, in the 2nd stage, an addition process is repeated 16 times by shifting the start slot one by one. Moreover, the number of additions per one addition process is 15 times. Therefore, the total number of additions is:

$$15 \text{ times} \times 16 \text{ slots} = 240 \text{ times}$$

In this way, a cell search during handover requires a large amount of calculations in the 2nd stage, which takes much time to detect frame timing.

Then, problem 3) is explained. If it is desired to increase (or reduce) the number of scrambling codes according to the number of base stations installed in the radio communication system, the search code array patterns need to be reconfigured each time according to a change in the number of search code group. Furthermore, scrambling codes need to be reassigned to the search code group each time. Therefore, it is impossible to change the number of scrambling codes flexibly according to the number of base stations installed in the radio communication system.

Disclosure of Invention

An object of the present invention is to provide an apparatus and method for synchronization acquisition that can flexibly correspond to a change in the number of scrambling codes and shorten the time required for synchronization acquisition by reducing the amount of calculations necessary to identify a search code group and to detect frame timing.

In order to achieve the above objective, the present invention, instead of identifying a search code group and detecting frame timing simultaneously, first identifies the search code group by calculating a correlation value for each search code group using at least two search codes that are assigned for each search code group beforehand, and specific corresponding to each search code group , and then detects frame timing by calculating correlation values using at least two search codes that have array patterns corresponding to the identified search code group.

To achieve the above objective, the present invention assigns at least two search codes to respective search code groups in such a way that these search codes do not overlap among different search code groups.

Brief Description of Drawings

FIG.1 is a flow chart to explain operation of a conventional synchronization acquisition method;
FIG.2 is a search code group location table used in the conventional synchronization acquisition method;
FIG.3 is a schematic diagram showing how correlation values are calculated according to the conventional synchronization acquisition method;
FIG.4 is a schematic diagram showing how power values are added up according to the conventional synchronization acquisition method;

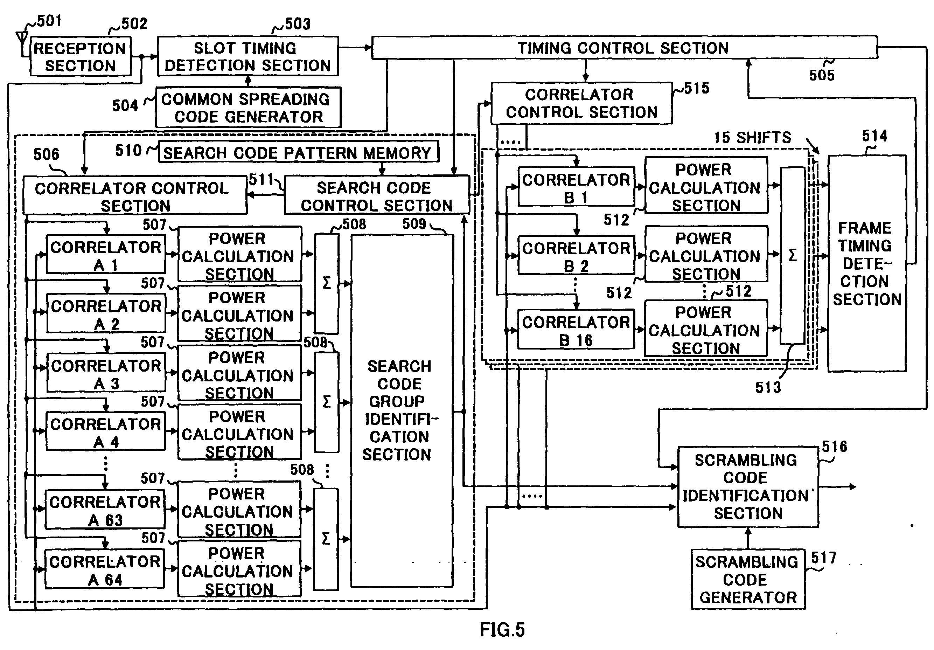

FIG.5 is a block diagram showing a configuration of a synchronization acquisition apparatus according to Embodiment 1 of the present invention;

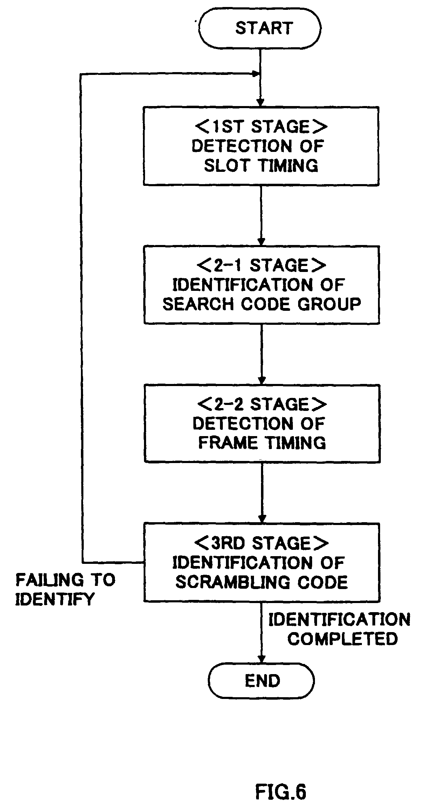

FIG.6 is a flow chart to explain operation of the synchronization acquisition apparatus according to Embodiment 1 of the present invention;

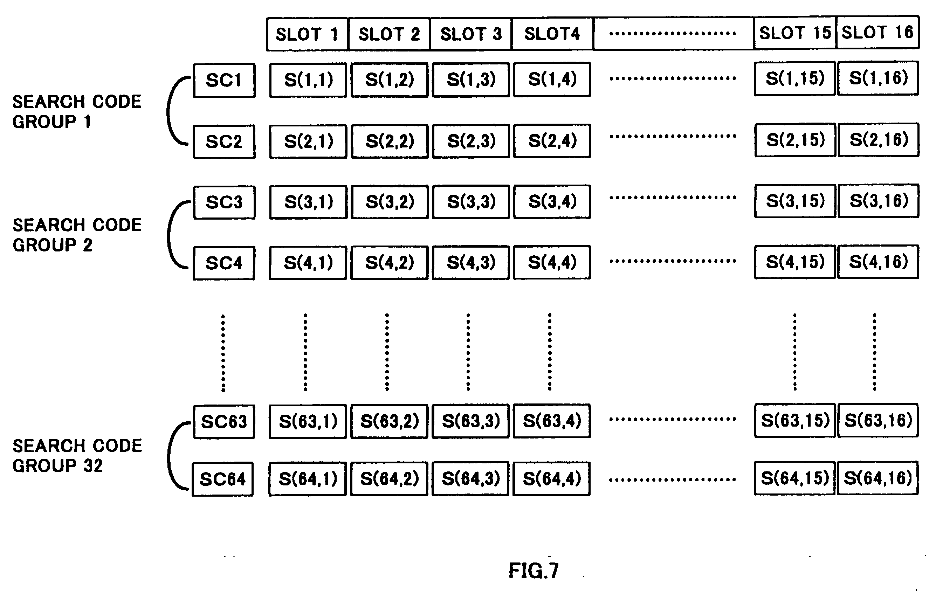

FIG.7 is a schematic diagram showing how correlation values are calculated in the synchronization acquisition apparatus according to Embodiment 1 of the present invention;

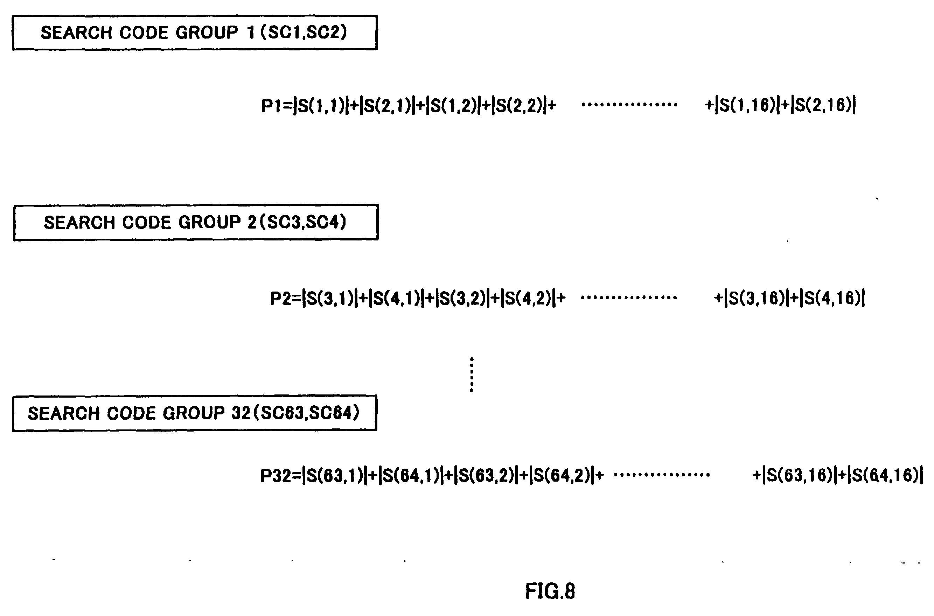

FIG.8 is a schematic diagram showing how power values are added up in the synchronization acquisition apparatus according to Embodiment 1 of the present invention;

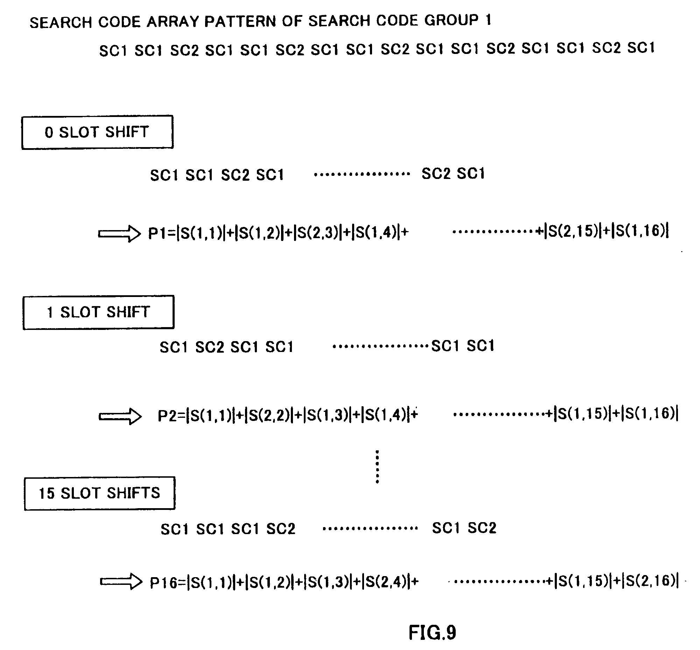

FIG.9 is another schematic diagram showing how power values are added up in the synchronization acquisition apparatus according to Embodiment 1 of the present invention;

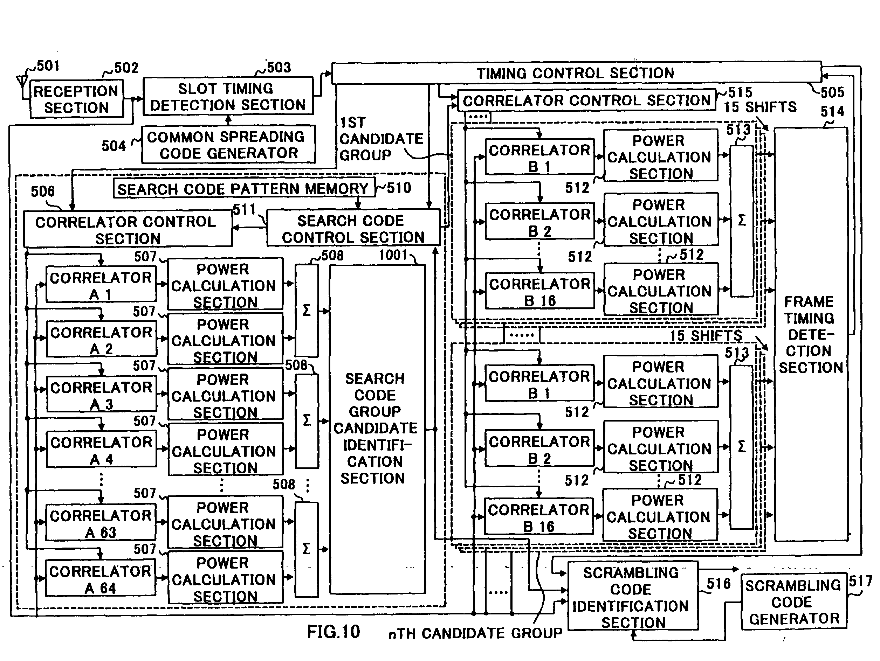

FIG.10 is a block diagram showing a configuration of a synchronization acquisition apparatus according to Embodiment 2 of the present invention;

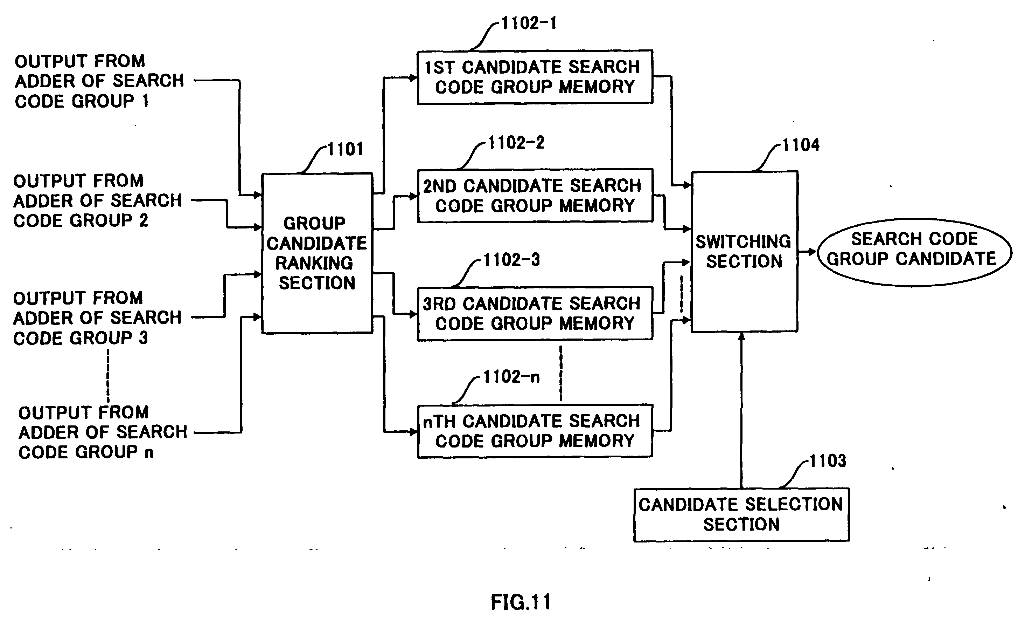

FIG.11 is a block diagram showing a configuration of a search code group candidate identification section of the synchronization acquisition apparatus according to Embodiment 2 of the present invention;

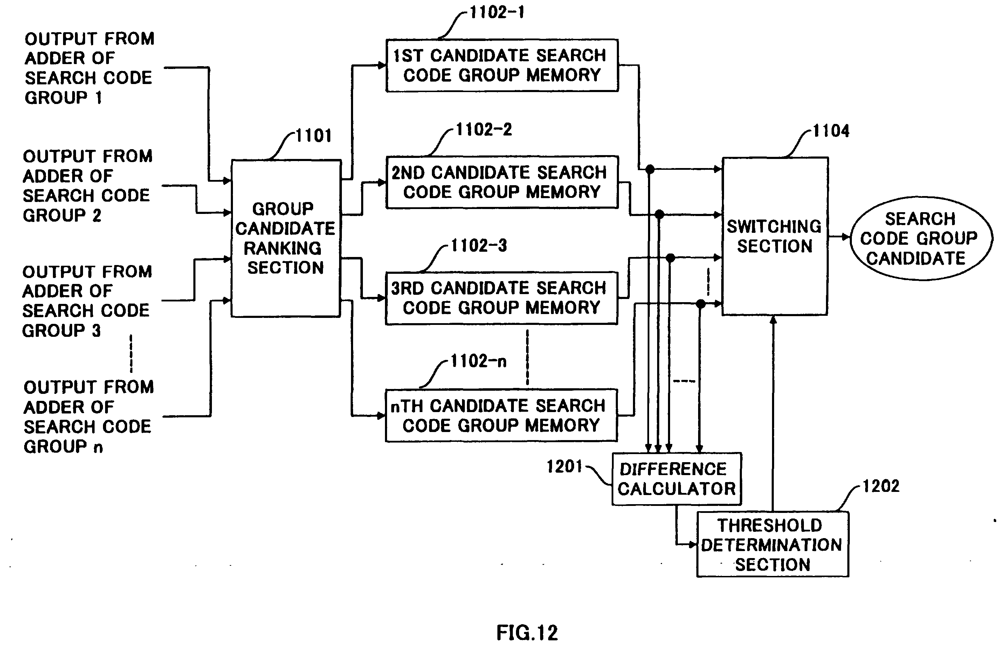

FIG.12 is a block diagram showing a configuration of a search code group candidate identification section of a synchronization acquisition apparatus according to Embodiment 3 of the present invention;

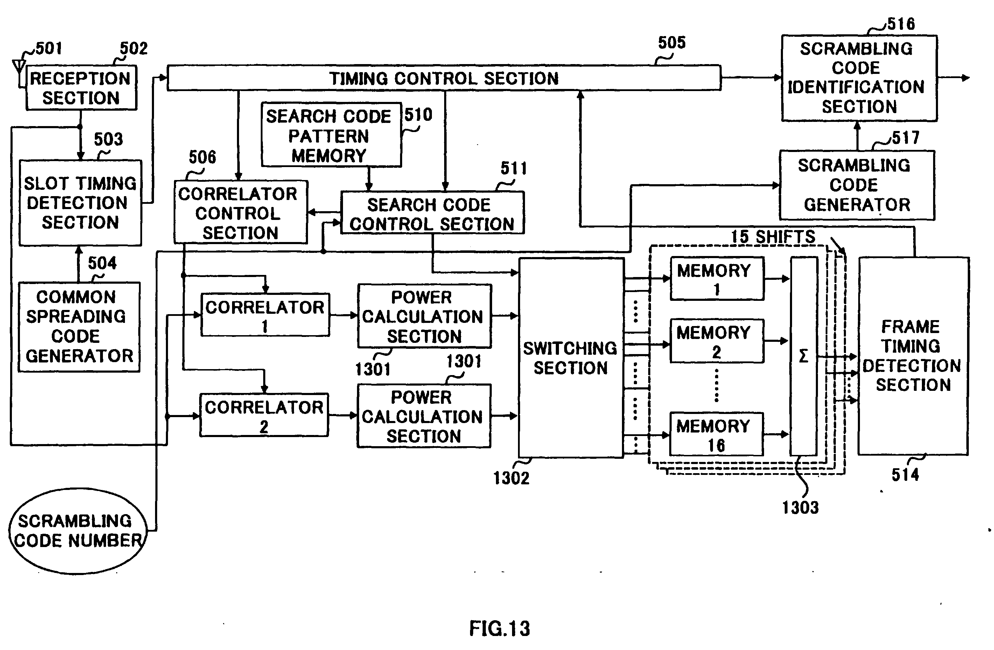

FIG.13 is a block diagram showing a configuration of a synchronization acquisition apparatus according to Embodiment 4 of the present invention; and

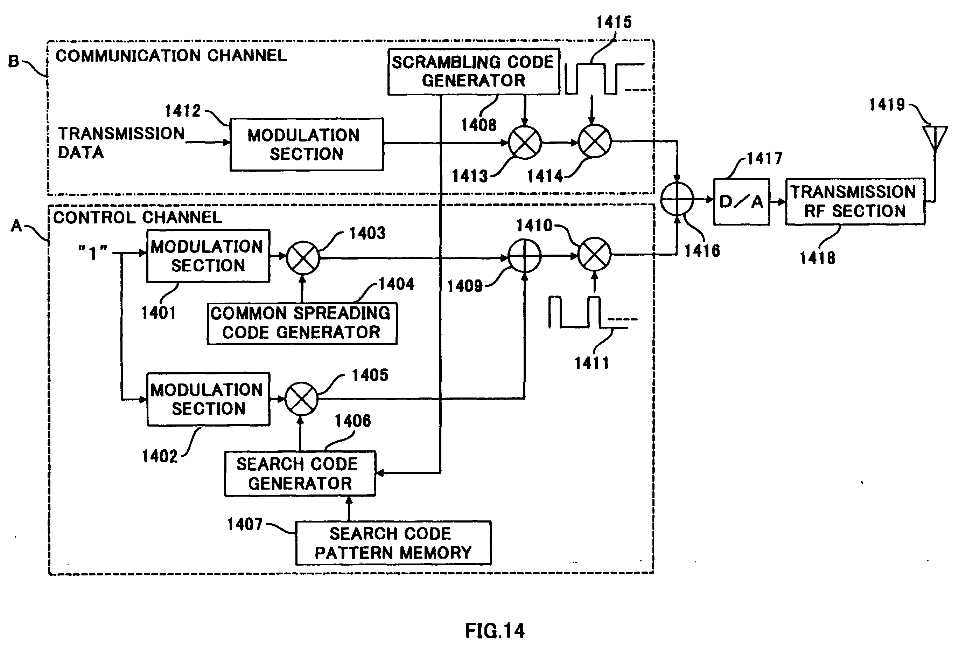

FIG.14 is a block diagram showing a configuration of a transmission section of a mobile communication base station apparatus according to Embodiment 5 of the present invention.

Best Mode for Carrying out the Invention

With reference now to the attached drawings, the embodiments of the apparatus and method for synchronization acquisition of the present invention are explained in detail below.

(Embodiment 1)

In the present embodiment, as in the case of the explanation of the conventional synchronization acquisition method above, it is assumed that the number of slots in one frame is 16 slots, the number of scrambling codes is 512 and the number of search code groups is 32. Furthermore, a case where two search codes are assigned to one search code group is explained. Here, two search codes are assigned to one search code group for the following reason. That is, when setting array patterns of search code used to detect frame timing, by replacing the two search codes with two types of code of "1" and "-1" and setting search code array patterns as a code system with high self-correlation, for example, an M system, it is possible to further improve the accuracy in detecting frame timing. In this way, it is the best to assign two search codes to one search code group. However, frame timing can also be detected even with more than two search codes, and therefore the number of search codes to be assigned to one search code group can be any number equal to or greater than 2. Thus, it is possible to improve the accuracy in identifying search code groups by assigning at least two search codes which are not used in other search code groups for each search code group.

First, the configuration of the synchronization acquisition apparatus according to the present embodiment is explained. FIG.5 is a block diagram showing a configuration of the synchronization acquisition apparatus according to Embodiment 1 of the present invention.

In FIG.5, reception section 502 frequency-converts a signal received by antenna 501 to a baseband signal. Reception section 502 further converts the baseband signal to a digital signal.

Slot timing detection section 503 detects slot timing using a common spreading code output from common spreading code generator 504. This timing information is input to timing control section 505 and all subsequent processing is carried out according to this timing.

Correlators A1 to A64 calculate correlation values of the slots of the received signal with search codes SC1 to SC64 respectively to identify search code groups. At this time, correlator control section 506 performs timing control over correlators A1 to A64 at timing synchronized with the slot timing. Power calculation sections 507 calculate power values of the correlation values output from correlators A1 to A64. Adders 508 are provided one for each two correlators (for example, correlators A1 and A2), and add up power values for each search code group. Search code group identification section 509 detects a maximum value of the power value sums of each search code group and identifies the search code group. Information indicating the identified search code group is sent to search code control section 511.

Search code pattern memory 510 stores search code array patterns corresponding to respective search code groups. Search code control section 511 references search code pattern memory 510 and outputs a search code according to the search code array pattern corresponding to the identified search code group.

Combinations of correlators B1 to B16, power calculation sections 512 and adder 513 are provided by the same number as the number of slots contained in one frame. The explanation here assumes that one frame has 16 slots, and therefore 16 combinations of correlators B1 to B16, power calculation sections 512 and adder 513 are provided for 0 to 15 slot shifts. Search code control section 511 shifts search codes corresponding to 1 slot (0 to 15 slot shits) and outputs the shifted search codes. Correlators B1 to 16 for 0 to 15 slot shifts calculate correlation values of slots with the shifted search codes output from search code section 511, and therefor the correlation values corresponding to 0 to 15 slot shifts are calculated simultaneously. Power calculation sections 512 calculate power values of correlation values output from correlators B1 to B16 and adder 513 adds up these power values for every slot shift. Frame timing detection section 514 detects frame timing from the amount of shift corresponding to the maximum output of adder 513. Here, correlators B1 to B16 are controlled by correlator control section 515, which is controlled by search code control section 511.

Scrambling code identification section 516 calculates correlation values between scrambling codes that belong to the identified search code group and received signal one by one according to the detected frame timing and identifies the scrambling code corresponding to the maximum correlation value. Scrambling codes are output from scrambling code generator 517. In the subsequent processing, the received signal is despread using this identified scrambling code to obtain the reception data. With this, the mobile station completes initial synchronization with the desired base station and is ready to start a communication.

Then, the operation of the synchronization acquisition apparatus with the above configuration is explained using FIG.6 to FIG.9. FIG.6 is a flow chart to explain the operation of the synchronization acquisition apparatus according to Embodiment 1 of the present invention. FIG.7 is a schematic diagram showing how correlation values are calculated in the synchronization acquisition apparatus according to Embodiment 1. FIG.8 and FIG.9 are schematic diagrams showing how power values are added up in the synchronization acquisition apparatus according to Embodiment 1.

Synchronization acquisition in the synchronization acquisition apparatus according to the present embodiment is performed in the case of a cell search at initial synchronization as shown in FIG.6, through〈1st stage〉detection of slot timing,〈2-1 stage〉identification of search code group,〈2-2 stage〉detection of frame timing, and〈3rd stage〉identification of scrambling code. Identification of a search code group and detection of frame timing, which are carried out together in the second stage of the conventional synchronization acquisition apparatus, are carried out separately in the present embodiment as〈2-1 stage〉identification of search code group and〈2-2 stage〉detection of frame timing. That is, the synchronization acquisition apparatus according to the present embodiment identifies a search code group from two types of search code first and then detects frame timing using only two types of search code that have the array pattern corresponding to the identified search code group.

Processing carried out in the〈1st stage〉to〈3rd stage〉is explained below.

〈1st stage〉Detection of slot timing

In the 1st stage, slot timing is detected as follows:

(A) Slot timing detection section 503 calculates a correlation value between a one-slot portion of the reception data and a common spreading code generated by common spreading code generator 504.
(B) Slot timing detection section 503 shifts the phase of the common spreading codes sequentially and calculates correlation values for one frame.
(C) Slot timing detection section 503 detects a peak of the correlation values for one frame and detects the peak timing as slot timing.

〈2-1 stage〉Identification of search code group

In the 2-1 stage, a search code group is identified before frame timing is detected in the 2-2 stage.
The present embodiment assigns at least two (two in the present embodiment) search codes to one search code group beforehand. More specifically, as shown in FIG.7, search codes SC1 and SC2 are assigned to search code group 1 and search codes SC3 and SC4 are assigned to search code group 2. Likewise, two search codes are assigned to each of all search code groups. Search code groups are identified using the search codes (group identification search codes) assigned to each of all search code groups as follows:

(A) According to the slot timing detected in the 1st stage, correlators A1 to A64 carry out correlation between a specific one symbol of each slot within one frame and a search code to calculate a correlation value. This correlation processing is performed on slots 1 to 16 with each of search codes SC1 to SC64 as shown in FIG.7. That is, with search code SC1, correlator A1 calculates correlation values $S(1,1)$ to $S(1,16)$ of slots 1 to 16. Likewise, for search codes SC2 to SC64, correlators A2 to A64 calculate correlation values of slots 1 to 16.

(B) Power calculation sections 507 calculate power values of the correlation values calculated by correlators A1 to A64.

(C) Each of adders 508 provided for each two correlators (for example, correlators A1 and A2) adds up power values for each search code group and calculates power value sums P1 to P32 as shown in FIG.8.

(D) Search code group identification section 509 identifies a search code group with a maximum power value sum of as the search code group. Here, suppose for example, P1 shown in FIG.8 reaches a maximum value and search code group 1 is identified. The information indicating this identified search code group is sent to search code control section 511 and scrambling code identification section 516.

〈2-2 stage〉 Detection of frame timing

In the 2-2 stage, frame timing is detected using the search code assigned to the search code group identified in the 2-1 stage as follows:

(A) Search code pattern memory 510 stores a search code array pattern of search code group 1 as shown in FIG.9. Then, search code control section 511 outputs search codes by shifting slots one by one according to this search code array pattern as shown in FIG.9.

The search code array pattern of search code group 1 shown in FIG.9 is only one example, and any array pattern can be used as the search code array pattern of search code group 1 if the search code array pattern consists of two search codes.

(B) Correlators B1 to B16 for 0 to 15 slot shifts calculate correlation values of each slot with search codes SC1 and SC2 corresponding to 0 to 15 slot shifts simultaneously.

(C) Power calculation sections 512 calculate power values of the correlation values calculated by correlators B1 to B16.

(D) Adder 513 adds up the calculated power values for every slot shift as shown in FIG.9 and calculates power value sums P1 to P16 for respective slot shifts.

(E) Frame timing detection section 514 detects frame timing from the amount of shift corresponding to the maximum output of adder 513.

〈3rd stage〉 Identification of scrambling code

In the 3rd stage, one scrambling code is identified from among 16 scrambling code candidates that belong to the search code group identified in the 2-1 stage according to the frame timing detected in the 2-2 stage as follows:

(A) Scrambling code identification section 516 calculates correlation values between the reception data and 16 scrambling codes one by one according to the detected frame timing.

(B) Scrambling code identification section 516 identifies the largest of all these correlation results as the scrambling code.

(C) If scrambling code identification section 516 fails to identify the scrambling code, the same procedure is repeated from the 〈1st stage〉 detection of slot timing.

Here, the number of additions required until the search code group is identified in the present embodiment is calculated as follows: That is, as shown in FIG.8, power values are added up for 32 search code groups. Moreover, since 32 power values are added for each search code group, the number of additions for one addition process is 31. Therefore, the total number of additions required until the search code group is identified is:

$$31 \text{ times} \times 32 \text{ search code groups} = 992 \text{ times}$$

Therefore, the number of additions required until the search code group is identified is considerably reduced compared to 7680 times of the conventional synchronization acquisition method.

Furthermore, the number of additions required until the frame timing is detected in the present embodiment is calculated as follows: That is, as shown in FIG.9, power values are added up 16 times for 0 to 15 shifts by shifting the start slot one by one. The number of additions each time is 15 times. Therefore, the total number of additions until the frame timing is detected is:

Number of additions required to identify search code group  + Number of additions required to detect frame timing = 992 times + (15 times × 16 slots)

= 1232 times

Therefore, the number of additions required until the frame timing is detected is considerably reduced compared to 7680 times in the conventional synchronization acquisition method.

As shown above, the present embodiment divides the 2nd stage in the conventional synchronization acquisition method into the 2-1 stage and 2-2 stage. In the 2-1 stage, one search code group is identified first using at least two search codes assigned to respective search code groups. In this way, the present embodiment separates identification of a search code group and detection of frame timing, which are carried out simultaneously in the conventional synchronization acquisition method, and carries out only identification of a search code group first, allowing the number of additions necessary to identify a search code group to be reduced. As a result, it is possible to shorten the time required to identify a search code group and shorten the time required for synchronization acquisition.

Furthermore, in the 2-2 stage, detection of frame timing that has been conventionally carried out for a plurality of search code groups need to be carried out for only the one search code group identified in the 2-1 stage, making it possible to reduce the number of additions required for detection of frame timing. As a result, it is possible to reduce the time required for detection of frame timing and reduce the time required for synchronization acquisition.

In the present embodiment, the total number of calculations of correlation values is increased compared to the conventional synchronization acquisition method. However, since the number of power value sums is reduced considerably compared to conventional synchronization acquisition method, the number of comparison operations between power value sums is also reduced considerably. Moreover, even if the processing time drastically reduced by a reduction of the number of comparison operations between power value sums is canceled out by an increase of the total number of calculations of correlation values, the time required for synchronization acquisition can still be reduced when the whole synchronization acquisition is considered.

Furthermore, in the present embodiment, the array patterns of search codes to detect frame timing are not so complicated as those of the conventional synchronization acquisition method. Nor do search codes overlap among different search code groups. That is, a specific search code, which is not assigned to other search code groups is assigned to each search code group. Therefore, even if the number of search code groups changes due to a change in the number of scrambling codes, the change can easily be compensated by simply changing the number of search codes according to the change in the number of search code groups. That is, array patterns of search codes need not be reconfigured. Nor is it necessary to reassign scrambling codes to search code groups. Therefore, the number of scrambling codes can flexibly be changed according to the number of base stations installed within the radio communication system.

In addition, the present embodiment also allows each correlator to be used by time division, and therefore the number of correlators is not limited to the number of correlators shown in FIG.5.

(Embodiment 2)

The synchronization acquisition apparatus according to the present embodiment has the same configuration as that of Embodiment 1, except differences in that aiming at improvement of cell search performance at initial synchronization, a plurality of predetermined search code groups is identified in descending order of power value sums as search code group candidates instead of identifying one search code group in the 2-1 stage and frame timing is detected according to each search code group candidate in the 2-2 stage.

FIG.10 is a block diagram showing a configuration of the synchronization acquisition apparatus according to Embodiment 2 of the present invention. However, the parts in FIG.10 with the same configuration as that of the synchronization acquisition apparatus shown in FIG.5 are assigned the same codes as those in FIG.5 and their detailed explanations are omitted. Moreover, the present embodiment is explained assuming that the prerequisites regarding the number of slots in one frame, number of scrambling codes and number of search code groups. etc. are the same as those in Embodiment 1.

The synchronization acquisition apparatus shown in FIG.10 comprises search code group candidate identification section 1001 that identifies a plurality of predetermined search code group candidates to improve cell search performance at initial synchronization. That is, in order to reduce a probability of search code groups being identified erroneously in a poor transmission path with the presence of valleys of fading, search code group candidate identification section 1001 identifies a plurality of predetermined search code group candidates instead of identifying one search code group. Combinations of correlators B1 to B16, power calculation sections 512 and adder 513 provided by the same number as the number of slots included in one frame are further provided by the number of a plurality of predetermined search code group candidates n.

The operation of the synchronization acquisition apparatus with the configuration above is explained. Here, the operations up to the 2-1 stage (C) and operation in the 3rd stage are the same as those in Embodiment 1 and their explanations are omitted.

〈2-1 stage〉

(D) Search code group candidate identification section 1001 identifies a plurality of the predetermined 1st to nth search code groups as search code group candidates in descending order of power value sums. The information indicating these identified search code group candidates is sent to search code control section 511 and scrambling code identification section 516.

〈2-2 stage〉 Detection of frame timing

In the 2-2 stage, frame timing is detected using the search code assigned to each search code group candidate identified in the 2-1 stage as follows:

(A) Search code control section 511 outputs search codes by shifting one slot at a time according to the array pattern of search codes assigned to the 1st to nth candidate search code groups.
(B) Correlators B1 to B16 calculate correlation values of slots with each of search codes of the 1st to nth candidates corresponding to 0 to 15 slot shifts simultaneously.
(C) Power calculation section 512 calculates power values of correlation values calculated by correlators B1 to B16.
(D) Adder 513 adds up the calculated power values for every slot shift and calculates power value sums for each of the 1st to nth candidates and for every slot shift.
(E) Frame timing detection section 514 detects frame timing from the amount of shift corresponding to the maximum output of adder 513.

Then, the configuration and operation of search code group candidate identification section 1001 are explained. FIG.11 is a block diagram showing a configuration of the search code group candidate identification section according to Embodiment 2 of the present invention.
Once power value sums are calculated for each search code group, group candidate ranking section 1101 ranks (priority order) each search code group in the descending order of power value sums and determines the 1st to nth candidates. Then, group candidate ranking section 1101 instructs memories 1102-1 to 1102-n corresponding to the 1st to nth candidates to store correlation values of the 1st to nth candidate search code groups. The number of search code group candidates to be selected is preset in candidate selection section 1103. Then, candidate selection section 1103 outputs a control signal indicating that predetermined number of candidates to switching section 1104. Switching section 1104 changes the number of candidates to be identified according to the control signal and selects a plurality of search code groups corresponding to a predetermined number of candidates in descending priority order of candidates as the search code group candidates. Using such a configuration of the search code group candidate identification section allows the search code group candidates to be identified in a meticulous manner, improving the performance of the synchronization acquisition apparatus.
Thus, securing a plurality of search code group candidates shortens the time required for synchronization acquisition and reduces the probability of erroneously identifying search code groups under poor propagation conditions such as at valleys of fading. That is, under poor propagation conditions, it is possible to select scrambling codes from among other search code group candidates even if a most likely scrambling code is erroneously identified, improving the cell search performance compared to Embodiment 1. In this case, the number of additions of power values is greater than that of Embodiment 1. However, the number of additions of power values is smaller than that of the conventional synchronization acquisition method.
Since the present embodiment also allows correlators to be used by time multiplexing, the number of correlators is not limited to the number of correlators shown in FIG.10.

(Embodiment 3)

The synchronization acquisition apparatus according to the present embodiment has the same configuration as that of Embodiment 2, except differences in that the search code group candidate identification section variably changes the number of search code group candidates to be identified according to propagation conditions.
FIG.12 is a block diagram showing a configuration of the search code candidate identification section of the synchronization acquisition apparatus according to Embodiment 3. However, the parts in FIG.12 with the same configuration as that of the search code group candidate identification section shown in FIG.11 are assigned the same codes as those in FIG.11 and their detailed explanations are omitted.

Under poor propagation conditions, the difference between power value sums for each search code group is small. Using this feature, difference calculator 1201 calculates differences between a sum of correlation values of the first candidate search code group and a sum of correlation values of the other candidate search code groups one by one. Then, threshold determination section 1202 compares those differences with a threshold. In the case that the difference is smaller than a predetermined threshold, switching section 1104 selects other candidate search code groups targeted for calculating the difference as search code group candidates in addition to the first candidate search code group. The reason that search code group candidates are selected in this way is that the smaller the difference from the sum of correlation values of the first candidate search code group becomes, the greater the likelihood to be a search code group candidate becomes.

As shown above, the present embodiment can change the number of search code group candidates to be identified according to propagation conditions, making it possible to reduce the probability of erroneously identifying search code groups under poor propagation conditions such as at valleys of fading.

(Embodiment 4)

The synchronization acquisition apparatus according to the present embodiment is used in the case of a cell search during handover.

In the case of a cell search during handover, since the mobile station is notified of the scrambling code number given to the transfer destination base station from the transfer source base station, the mobile station does not need to identify scrambling codes. However, the base stations are asynchronous, and therefore, the mobile station needs to detect only slot timing and frame timing again using the scrambling code numbers notified from the transfer source base station.

The configuration and operation of the synchronization acquisition apparatus according to the present embodiment are explained using FIG.13. FIG.13 is a block diagram showing a configuration of the synchronization acquisition apparatus according to Embodiment 4 of the present invention. However, the parts in FIG.13 with the same configuration as that of the synchronization acquisition apparatus shown in FIG.5 are assigned the same codes as those in FIG.5 and their detailed explanations are omitted.

〈1st stage〉 Detection of slot timing

Since this is the same processing as that in Embodiment 1, this explanation is omitted.

〈2nd stage〉 Detection of frame timing

In the 2nd stage, frame timing is detected using the scrambling code number of the transfer destination base station notified from the transfer source base station as follows:

(A) Search code control section 511 notified of the scrambling code number first references search code pattern memory 510. Then, search code control section 511 outputs two search codes according to the search code array pattern of the search code group to which the notified scrambling code belongs.
(B) Correlator 1 calculates a correlation value of each slot (16 slots) of the received signal with one of the two search codes assigned to the search code group. Likewise, correlator 2 calculates a correlation value for the other search code assigned to the search code group. Then, power calculation section 1301 calculates power values of respective correlation values.
(C) The power values calculated for the slots (16 slots) are stored in memories 1 to 16 for 0 to 15 slot shifts under the switching processing by switching section 1302 according to the search code array patterns shifted corresponding to one slot from 0 to 15 slot shifts. At this time, the switching timing of switching section 1302 is controlled by search code control section 511.
(D) Adder 1303 calculates power value sums for every slot shift.
(E) Frame timing detection section 514 detects frame timing from the amount of shift corresponding to the maximum output of adder 1303.

Thus, the present embodiment calculates correlation values of 16 slots with two search codes. Therefore, the total number of calculations of correlation values is:

2 search codes × 16 slots = 32 times

Therefore, the number of calculations of correlation values necessary to detect frame timing has considerably reduced compared to 256 times in the conventional synchronization acquisition method.

On the other hand, the addition process is carried out 16 times for every slot shift. The number of additions per one addition process is 15 times. Therefore, the total number of additions is:

15 times × 16 slots = 240 times

Therefore, the number of additions necessary to detect frame timing is 240 times, the same as that in the conventional synchronization acquisition method.

Thus, since the number of search codes assigned to one search code group is less than that in the conventional synchronization acquisition method, the present embodiment allows the number of calculations of correlation values necessary to detect frame timing to be reduced, making it possible to shorten the time required to detect frame timing.

The present embodiment explains the case where two search codes are assigned to one search code group. This is because the case with two search codes can improve the accuracy in detecting frame timing compared with the case with three or more search codes for the same reason as that in Embodiment 1. However, even if there are three or more search codes, the same effect can be achieved in respect of reduction in the amount of calculations.

(Embodiment 5)

Then, a mobile communication base station apparatus that carries out a radio communication with a mobile communication terminal apparatus equipped with the synchronization acquisition apparatus according to Embodiments 1 to 5 above is explained below. FIG.14 is a block diagram showing a configuration of a transmission section of the mobile communication base station apparatus according to Embodiment 5 of the present invention.

Signals processed in this transmission section are mainly a control channel signal necessary for synchronization acquisition in the mobile station and a communication channel signal, which is transmission data. The control channel signal is processed by block A in FIG.14. Moreover, the control channel signal is a signal spread using a common spreading code and search code. On the other hand, the communication channel signal is processed in block B in FIG.14. Moreover, the communication channel signal is a signal spread using a scrambling code.

First, block A that processes the control channel signal is explained. All signals input to modulation sections 1401 and 1402 are signals "1". This signal "1" is modulated by modulation sections 1401 and 1402.

Then, the signal modulated by modulation section 1401 is spread by spreader 1403 using the common spreading code output from common spreading code generator 1404 for all slots.

On the other hand, the signal modulated by modulation section 1402 is spread by spreader 1405 using the search code output from search code generator 1406 for all slots. The array patterns of this search code are stored in search code array pattern memory 1407 for each search code group. Moreover, at least two search codes, which are not used in other search code groups, are assigned to each search code group.

When notified of a scrambling code number from scrambling code generator 1408, search code generator 1406 references search code array pattern memory 1407 and generates a search code according to the array pattern of the search code group to which the notified scrambling code belongs.

The signal spread using the common spreading code and the signal spread using the search code are multiplexed by adder 1409. The multiplexed signal is multiplied by pulse signal 1411 according to a frame format by multiplier 1411.

Then, block B that processes the communication channel signal is explained. First, transmission data is modulated by modulation section 1412. The modulated signal is spread by spreader 1413 using a scrambling code generated by scrambling code generator 1408. The signal spread using the scrambling code is multiplied by pulse signal 1415 according to a frame format by multiplier 1414.

Then, adder 1416 multiplexes the control channel signal with the communication channel signal. This multiplexed signal is converted to a digital signal by D/A converter 1417, frequency-converted to a carrier frequency by transmission RF section 1418 and then transmitted via antenna 1419.

Using the signal transmitted in this way, the mobile station detects slot timing using the common spreading code in the 1st stage. The mobile station identifies a search code group in the 2-1 stage and detects frame timing in the 2-2 stage using the search code. Then, the mobile station identifies the scrambling code in the 3rd stage and despreads the reception using this identified scrambling code to obtain the reception data. In this way, the mobile station can perform synchronization acquisition stepwise and fast.

In the explanation above, all signals input to modulation sections 1401 and 1402 are assumed to be "1" for convenience of explanation, but the present embodiment is not limited to this and the signal can be any signal other than "1".

Thus, in the present embodiment, the mobile communication base station apparatus spreads the control channel signal using at least two search codes that are not used by other search code groups. Therefore, the mobile station can shorten the time required for synchronization acquisition at initial synchronization or during handover. The mobile station can also flexibly correspond to changes in the number of search codes.

In addition, Embodiments 1 to 4 above can be implemented in appropriate combinations thereof.

The synchronization acquisition apparatuses according to Embodiments 1 to 4, when used in a radio communication apparatus, whether a mobile station or fixed station, will produce the same effects as those in Embodiments 1 to 4 above.

As explained above, the present invention can flexibly correspond to a change in the number of scrambling codes and shorten the time required for synchronization acquisition by reducing the amount of calculations necessary to identify a search code group and to detect frame timing.

This application is based on the Japanese Patent Application No.HEI 10-259483 filed on August 28, 1998, entire content of which is expressly incorporated by reference herein.

Industrial Applicability

The present invention is applicable to a mobile communication terminal apparatus and base station apparatus used in a CDMA-based radio communication system.

**Claims**

1.   A synchronization acquisition apparatus comprising:

   identifying means for identifying a search code group by calculating a correlation value for each search code group using at least two search codes assigned to each search code group beforehand; and
   detecting means for detecting frame timing by calculating a correlation value using two search codes that have array patterns corresponding to identified search code group.

2.   The synchronization acquisition apparatus according to claim 1, wherein the two search codes are assigned to respective search code groups in such a way that these search codes do not overlap among search code groups.

3.   The synchronization acquisition apparatus according to claim 2, wherein array patterns of the two search codes are set to form a code series with high self-correlation.

4.   The synchronization acquisition apparatus according to claim 1, wherein the identifying means identifies one search code group and the detecting means calculates a correlation value using a search code having an array pattern corresponding to identified search code group.

5.   The synchronization acquisition apparatus according to claim 1, wherein the identifying means identifies at least one search code group candidate and the detecting means calculates a correlation value using a search code having an array pattern corresponding to identified search code group candidate.

6.   The synchronization acquisition apparatus according to claim 5, wherein the identifying means comprising:

   adding means for adding priority order to a plurality of search code groups according to a correlation value calculated for each search code group; and
   selecting means for selecting at least one search code group candidate according to the priority order.

7.   The synchronization acquisition apparatus according to claim 5, wherein the identifying means comprising:

   adding means for adding priority order to a plurality of search code groups according to the correlation value calculated for each search code group;
   calculating means for calculating a difference between a correlation value calculated for the search code group with the first priority and another correlation value calculated for a search code group with priority other than the first priority one by one; and
   selecting means for comparing the difference with a predetermined threshold, and in the case that the difference is smaller than the predetermined threshold, selecting the search code group with priority other than the first priority as a search code group candidate in addition to the search code group with the first priority.

8. A synchronization acquisition apparatus comprising:

   identifying means for identifying a search code group corresponding to a known scrambling code and a array pattern of the search code; and
   detecting means for detecting frame timing by calculating a correlation value using at least two search codes assigned to the search code group beforehand and with identified array pattern.

9. The synchronization acquisition apparatus according to claim 8, wherein the two search codes are assigned to respective search code groups in such a way that these search codes do not overlap among search code groups.

10. The synchronization acquisition apparatus according to claim 9, wherein array patterns of the two search codes are set to form a code series with high self-correlation.

11. A mobile communication terminal apparatus comprising the synchronization acquisition apparatus according to claim 1.

12. A mobile communication base station apparatus that carries out a radio communication with the mobile communication terminal apparatus according to claim 11.

13. A synchronization acquisition method, comprising :

   identifying a search code group by calculating a correlation value using at least two search codes assigned to each search code group beforehand; and
   detecting frame timing by calculating a correlation value using search codes that have array patterns corresponding to identified search code group.

14. A synchronization acquisition method, comprising:

   identifying a search code group corresponding to a known scrambling code and a array pattern of the search code; and
   detecting frame timing by calculating a correlation value using at least two search codes assigned to the search code group beforehand and with identified array pattern.

15. A synchronization acquisition method that assigns at least two search codes to respective search code groups in such a way that these search codes do not overlap among search code groups.

16. The synchronization acquisition method according to claim 15, wherein array patterns of the two search codes are set to form a code series with high self-correlation.

START

<1ST STAGE>
DETECTION OF
SLOT TIMING

<2ND STAGE>
IDENTIFICATION OF
SEARCH CODE GROUP
AND DETECTION OF
FRAME TIMING

<3RD STAGE>
IDENTIFICATION OF
SCRAMBLING CODE

FAILING TO
IDENTIFY

IDENTIFICATION
COMPLETED

END

FIG.1

| GROUP No. : | SLOT No. | | | | | | | | | | | | | | | |
|---|---|---|---|---|---|---|---|---|---|---|---|---|---|---|---|---|
| | 1 | 2 | 3 | 4 | 5 | 6 | 7 | 8 | 9 | 10 | 11 | 12 | 13 | 14 | 15 | 16 |
| 1 : | 1 | 1 | 2 | 11 | 6 | 3 | 15 | 7 | 8 | 8 | 7 | 15 | 3 | 6 | 11 | 2 |
| 2 : | 1 | 2 | 9 | 3 | 10 | 11 | 13 | 13 | 11 | 10 | 3 | 9 | 2 | 1 | 16 | 16 |
| 3 : | 1 | 3 | 16 | 12 | 14 | 2 | 11 | 2 | 14 | 12 | 16 | 3 | 1 | 13 | 4 | 13 |
| 4 : | 1 | 4 | 6 | 4 | 1 | 10 | 9 | 8 | 17 | 14 | 12 | 14 | 17 | 8 | 9 | 10 |
| 5 : | 1 | 5 | 13 | 13 | 5 | 1 | 7 | 14 | 3 | 16 | 8 | 8 | 16 | 3 | 14 | 7 |
| 6 : | 1 | 6 | 3 | 5 | 9 | 9 | 5 | 3 | 6 | 1 | 4 | 2 | 15 | 15 | 2 | 4 |
| 7 : | 1 | 7 | 10 | 14 | 13 | 17 | 3 | 9 | 9 | 3 | 17 | 13 | 14 | 10 | 7 | 1 |
| 8 : | 1 | 8 | 17 | 6 | 17 | 8 | 1 | 15 | 12 | 5 | 13 | 7 | 13 | 5 | 12 | 15 |
| 9 : | 1 | 9 | 7 | 15 | 4 | 16 | 16 | 4 | 15 | 7 | 9 | 1 | 12 | 17 | 17 | 12 |
| 10 : | 1 | 10 | 14 | 7 | 8 | 7 | 14 | 10 | 1 | 9 | 5 | 12 | 11 | 12 | 5 | 9 |
| 11 : | 1 | 11 | 4 | 16 | 12 | 15 | 12 | 16 | 4 | 11 | 1 | 6 | 10 | 7 | 10 | 6 |
| 12 : | 1 | 12 | 11 | 8 | 16 | 6 | 10 | 5 | 7 | 13 | 14 | 17 | 9 | 2 | 15 | 3 |
| 13 : | 1 | 13 | 1 | 17 | 3 | 14 | 8 | 11 | 10 | 15 | 10 | 11 | 8 | 14 | 3 | 17 |
| 14 : | 1 | 14 | 8 | 9 | 7 | 5 | 6 | 17 | 13 | 17 | 6 | 5 | 7 | 9 | 8 | 14 |
| 15 : | 1 | 15 | 15 | 1 | 11 | 13 | 4 | 6 | 16 | 2 | 2 | 16 | 6 | 4 | 13 | 11 |
| 16 : | 1 | 16 | 5 | 10 | 15 | 4 | 2 | 12 | 2 | 4 | 15 | 10 | 5 | 16 | 1 | 8 |
| 17 : | 1 | 17 | 12 | 2 | 2 | 12 | 17 | 1 | 5 | 6 | 11 | 4 | 4 | 11 | 6 | 5 |
| 18 : | 2 | 8 | 11 | 15 | 14 | 1 | 4 | 10 | 10 | 4 | 1 | 14 | 15 | 11 | 8 | 2 |
| 19 : | 2 | 9 | 1 | 7 | 1 | 9 | 2 | 16 | 13 | 6 | 14 | 8 | 14 | 6 | 13 | 16 |
| 20 : | 2 | 10 | 8 | 16 | 5 | 17 | 17 | 5 | 16 | 8 | 10 | 2 | 13 | 1 | 1 | 13 |
| 21 : | 2 | 11 | 15 | 8 | 9 | 8 | 15 | 11 | 2 | 10 | 6 | 13 | 12 | 13 | 6 | 10 |
| 22 : | 2 | 12 | 5 | 17 | 13 | 16 | 13 | 17 | 5 | 12 | 2 | 7 | 11 | 8 | 11 | 7 |
| 23 : | 2 | 13 | 12 | 9 | 17 | 7 | 11 | 6 | 8 | 14 | 15 | 1 | 10 | 3 | 16 | 4 |
| 24 : | 2 | 14 | 2 | 1 | 4 | 15 | 9 | 12 | 11 | 16 | 11 | 12 | 9 | 15 | 4 | 1 |
| 25 : | 2 | 15 | 9 | 10 | 8 | 6 | 7 | 1 | 14 | 1 | 7 | 6 | 8 | 10 | 9 | 15 |
| 26 : | 2 | 16 | 16 | 2 | 12 | 14 | 5 | 7 | 17 | 3 | 3 | 17 | 7 | 5 | 14 | 12 |
| 27 : | 2 | 17 | 6 | 11 | 16 | 5 | 3 | 13 | 3 | 5 | 16 | 11 | 6 | 17 | 2 | 9 |
| 28 : | 2 | 1 | 13 | 3 | 3 | 13 | 1 | 2 | 6 | 7 | 12 | 5 | 5 | 12 | 7 | 6 |
| 29 : | 2 | 2 | 3 | 12 | 7 | 4 | 16 | 8 | 9 | 9 | 8 | 16 | 4 | 7 | 12 | 3 |
| 30 : | 2 | 3 | 10 | 4 | 11 | 12 | 14 | 14 | 12 | 11 | 4 | 10 | 3 | 2 | 17 | 17 |
| 31 : | 2 | 4 | 17 | 13 | 15 | 3 | 12 | 3 | 15 | 13 | 17 | 4 | 2 | 14 | 5 | 14 |
| 32 : | 2 | 5 | 7 | 5 | 2 | 11 | 10 | 9 | 1 | 15 | 13 | 15 | 1 | 9 | 10 | 11 |

FIG.2

EP 1 028 552 A1

| | SLOT 1 | SLOT 2 | SLOT 3 | SLOT 4 | .................... | SLOT 15 | SLOT 16 |
|---|---|---|---|---|---|---|---|
| SC1 | S(1,1) | S(1,2) | S(1,3) | S(1,4) | .................... | S(1,15) | S(1,16) |
| SC2 | S(2,1) | S(2,2) | S(2,3) | S(2,4) | .................... | S(2,15) | S(2,16) |
| SC3 | S(3,1) | S(3,2) | S(3,3) | S(3,4) | .................... | S(3,15) | S(3,16) |
| SC4 | S(4,1) | S(4,2) | S(4,3) | S(4,4) | .................... | S(4,15) | S(4,16) |
| SC5 | S(5,1) | S(5,2) | S(5,3) | S(5,4) | .................... | S(5,15) | S(5,16) |
| | | | | | | | |
| SC16 | S(16,1) | S(16,2) | S(16,3) | S(16,4) | .................... | S(16,15) | S(16,16) |
| SC17 | S(17,1) | S(17,2) | S(17,3) | S(17,4) | .................... | S(17,15) | S(17,16) |

FIG.3

| 0 SLOT SHIFT |

SC1 SC1 SC2 SC11 ·················· SC11 SC2

$\Longrightarrow$ P1=|S(1,1)|+|S(1,2)|+|S(2,3)|+|S(11,4)|+ ··············· +|S(11,15)|+|S(2,16)|

| 1 SLOT SHIFT |

SC1 SC2 SC11 SC6 ·················· SC2 SC1

$\Longrightarrow$ P2=|S(1,1)|+|S(2,2)|+|S(11,3)|+|S(6,4)|+ ··············· +|S(2,15)|+|S(1,16)|

⋮

| 15 SLOT SHIFTS |

SC2 SC1 SC1 SC2 ·················· SC6 SC11

$\Longrightarrow$ P16=|S(2,1)|+|S(1,2)|+|S(1,3)|+|S(2,4)|+ ··············· +|S(6,15)|+|S(11,16)|

FIG.4

FIG.5

START

<1ST STAGE>
DETECTION OF
SLOT TIMING

<2-1 STAGE>
IDENTIFICATION OF
SEARCH CODE GROUP

<2-2 STAGE>
DETECTION OF
FRAME TIMING

FAILING TO
IDENTIFY

<3RD STAGE>
IDENTIFICATION OF
SCRAMBLING CODE

IDENTIFICATION
COMPLETED

END

FIG.6

EP 1 028 552 A1

| | | SLOT 1 | SLOT 2 | SLOT 3 | SLOT4 | .................... | SLOT 15 | SLOT 16 |
|---|---|---|---|---|---|---|---|---|
| SEARCH CODE GROUP 1 | SC1 | S(1,1) | S(1,2) | S(1,3) | S(1,4) | ............ | S(1,15) | S(1,16) |
| | SC2 | S(2,1) | S(2,2) | S(2,3) | S(2,4) | ............ | S(2,15) | S(2,16) |
| SEARCH CODE GROUP 2 | SC3 | S(3,1) | S(3,2) | S(3,3) | S(3,4) | ............ | S(3,15) | S(3,16) |
| | SC4 | S(4,1) | S(4,2) | S(4,3) | S(4,4) | ............ | S(4,15) | S(4,16) |
| SEARCH CODE GROUP 32 | SC63 | S(63,1) | S(63,2) | S(63,3) | S(63,4) | ............ | S(63,15) | S(63,16) |
| | SC64 | S(64,1) | S(64,2) | S(64,3) | S(64,4) | ............ | S(64,15) | S(64,16) |

FIG.7

EP 1 028 552 A1

| SEARCH CODE GROUP 1 (SC1,SC2) |
|---|

$$P1 = |S(1,1)| + |S(2,1)| + |S(1,2)| + |S(2,2)| + \cdots\cdots\cdots\cdots + |S(1,16)| + |S(2,16)|$$

| SEARCH CODE GROUP 2 (SC3,SC4) |
|---|

$$P2 = |S(3,1)| + |S(4,1)| + |S(3,2)| + |S(4,2)| + \cdots\cdots\cdots\cdots + |S(3,16)| + |S(4,16)|$$

⋮

| SEARCH CODE GROUP 32 (SC63,SC64) |
|---|

$$P32 = |S(63,1)| + |S(64,1)| + |S(63,2)| + |S(64,2)| + \cdots\cdots\cdots\cdots + |S(63,16)| + |S(64,16)|$$

FIG.8

SEARCH CODE ARRAY PATTERN OF SEARCH CODE GROUP 1

SC1 SC1 SC2 SC1 SC1 SC2 SC1 SC1 SC2 SC1 SC1 SC2 SC1 SC1 SC2 SC1

| 0 SLOT SHIFT |

SC1 SC1 SC2 SC1 ················· SC2 SC1

$\Longrightarrow$ P1=|S(1,1)|+|S(1,2)|+|S(2,3)|+|S(1,4)|+ ··············+|S(2,15)|+|S(1,16)|

| 1 SLOT SHIFT |

SC1 SC2 SC1 SC1 ··············SC1 SC1

$\Longrightarrow$ P2=|S(1,1)|+|S(2,2)|+|S(1,3)|+|S(1,4)|+ ···············+|S(1,15)|+|S(1,16)|

:

| 15 SLOT SHIFTS |

SC1 SC1 SC1 SC2 ················ SC1 SC2

$\Longrightarrow$ P16=|S(1,1)|+|S(1,2)|+|S(1,3)|+|S(2,4)|+ ················+|S(1,15)|+|S(2,16)|

FIG.9

EP 1 028 552 A1

FIG.10    nTH CANDIDATE GROUP

EP 1 028 552 A1

OUTPUT FROM
ADDER OF SEARCH
CODE GROUP 1

OUTPUT FROM
ADDER OF SEARCH
CODE GROUP 2

OUTPUT FROM
ADDER OF SEARCH
CODE GROUP 3

OUTPUT FROM
ADDER OF SEARCH
CODE GROUP n

GROUP
CANDIDATE
RANKING
SECTION
1101

1ST CANDIDATE SEARCH
CODE GROUP MEMORY
1102-1

2ND CANDIDATE SEARCH
CODE GROUP MEMORY
1102-2

3RD CANDIDATE SEARCH
CODE GROUP MEMORY
1102-3

nTH CANDIDATE SEARCH
CODE GROUP MEMORY
1102-n

SWITCHING
SECTION
1104

SEARCH CODE
GROUP CANDIDATE

CANDIDATE SELECTION
SECTION
1103

FIG.11

EP 1 028 552 A1

FIG.12

EP 1 028 552 A1

FIG.13

SCRAMBLING CODE IDENTIFICATION SECTION — 516

SCRAMBLING CODE GENERATOR — 517

FRAME TIMING DETECTION SECTION — 514

TIMING CONTROL SECTION — 505

15 SHIFTS

Σ — 1303

MEMORY 1

MEMORY 2

MEMORY 16

SWITCHING SECTION — 1302

POWER CALCULATION SECTION — 1301

POWER CALCULATION SECTION — 1301

SEARCH CODE CONTROL SECTION — 511

SEARCH CODE PATTERN MEMORY — 510

CORRELATOR CONTROL SECTION — 506

CORRELATOR 1

CORRELATOR 2

RECEPTION SECTION — 502 — 501

SLOT TIMING DETECTION SECTION — 503

COMMON SPREADING CODE GENERATOR — 504

SCRAMBLING CODE NUMBER

FIG.14

## INTERNATIONAL SEARCH REPORT

International application No.

PCT/JP99/04572

**A. CLASSIFICATION OF SUBJECT MATTER**
Int.Cl⁶   H04J13/00

According to International Patent Classification (IPC) or to both national classification and IPC

**B. FIELDS SEARCHED**

Minimum documentation searched (classification system followed by classification symbols)
Int.Cl⁶   H04J13/00

Documentation searched other than minimum documentation to the extent that such documents are included in the fields searched
Jitsuyo Shinan Koho          1926-1999     Toroku Jitsuyo Shinan Koho  1994-1999
Kokai Jitsuyo Shinan Koho  1971-1999     Jitsuyo Shinan Toroku Koho  1996-1999

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP, 3-088526, A (NEC Eng. Ltd.), 12 April, 1991 (12.04.91), Fig. 1  (Family: none) | 1-16 |
| A | US, 5103459, A (Qualcomm Inc.), 07 April, 1992 (07.04.92), Fig. 13 & JP, 6-501349, A | 1-16 |

☐ Further documents are listed in the continuation of Box C.      ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 19 November, 1999 (19.11.99) | 07 December, 1999 (07.12.99) |

| Name and mailing address of the ISA/ | Authorized officer |
|---|---|
| Japanese Patent Office | |
| Facsimile No. | Telephone No. |

Form PCT/ISA/210 (second sheet) (July 1992)

28